(19) Europäisches Patentamt
European Patent Office
Office européen des brevets

(11) **EP 1 965 351 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(51) Int Cl.:
**G06T 3/00** *(2006.01)*

(21) Anmeldenummer: **07103206.4**

(22) Anmeldetag: **28.02.2007**

(54) **Verfahren zum Transformieren mehrerer aktueller digitaler Bilder in ein digitales Zielbild mittels eines Bildtransformationsprozesses**

Method for transforming several current digital images into a digital target image via an image transformation process

Procédé destiné à la transformation de plusieurs images numériques actuelles dans une image cible numérique à l'aide d'un processus de transformation d'image

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**03.09.2008 Patentblatt 2008/36**

(73) Patentinhaber: **SIEMENS AKTIENGESELLSCHAFT ÖSTERREICH**
**1210 Wien (AT)**

(72) Erfinder:
• **Hennecke, Marcus**
**8045, Graz (AT)**
• **Schneider, Wolfgang**
**8010, Graz (AT)**

(56) Entgegenhaltungen:
US-A- 4 276 570          US-A- 5 982 909
US-B1- 6 351 269

• VIGNEAUX S ET AL: "A REAL-TIME VIDEO MAPPING AND MANIPULATION SYSTEM" SMPTE JOURNAL, SMPTE INC. SCARSDALE, N.Y, US, Bd. 100, Nr. 3, 1. März 1991 (1991-03-01), Seiten 162-166, XP000178490 ISSN: 0036-1682

**Beschreibung**

Die vorliegende Erfindung bezieht sich auf ein Verfahren zum Transformieren mehrerer aktueller digitaler Bilder in ein gleich bleibendes digitales Zielbild mittels eines Bildtransformationsprozesses, wobei sowohl das Zielbild als auch jedes der aktuellen Bilder Referenzpunkte aufweisen, die mittels Triangulation zu einer Anzahl einander nicht überlappender Dreiecke verbunden sind, wobei einem Dreieck in einem aktuellen Bild jeweils ein Dreieck im Zielbild zugeordnet ist bzw. umgekehrt und durch diese Zuordnung die Transformation eines Dreiecks samt der innerhalb des Dreiecks liegenden Bildpunkte eines aktuellen Bildes in das Zielbild vorgegeben ist und durch Transformation aller Dreiecke eines aktuellen digitalen Bildes in das digitale Zielbild die Bildtransformation des gesamten aktuellen Bildes in das Zielbild abgeschlossen ist.

Solche Bildtransformationsprozesse, auch Image Warping Prozesse genannt, sind hinlänglich bekannt, vgl. z.B. US-A-4276570. Dabei handelt es sich um bildbasierte geometrische Transformationstechniken die in unterschiedlichen Anwendungen zum Einsatz kommen können, wobei ein aktuelles Bild mit definierter Form auf ein Zielbild mit ebenfalls definierter Form transformiert werden soll. Üblicherweise wird zu diesem Zweck sowohl das Zielbild als auch das aktuelle Bild mit einer einander entsprechenden Anzahl an nicht überlappenden Dreiecken überzogen (Triangulation). Jedem Dreieck im aktuellen Bild entspricht dabei ein Dreieck im Zielbild. Jede Zuordnung eines Dreiecks des aktuellen Bildes zu einem Dreieck des Zielbildes definiert somit eine Transformation (warp), welche, um das gesamte aktuelle Bild in das Zielbild zu transformieren, auch auf jeden der Bildpunkte innerhalb der Dreieckes anzuwenden ist.

Der gesamte ein Bild transformierende Bildtransformationsprozess wird auf diese Art und Weise in eine Vielzahl einzelner leichterer und kleinerer Bildtransformationsprozesse aufgeteilt, wobei jeder einzelne dieser Bildtransformationsprozesse lediglich ein einzelnes der Dreiecke, samt den von jeweiligen Dreieck eingeschlossenen Bildpunkten, vom aktuellen Bild in das Zielbild transformiert.

Bei den Eckpunkten der Dreiecke handelt es sich um Referenzpunkte (Landmarks), welche für die Form des jeweiligen Bildes (aktuelles Bild, Zielbild) relevant sind und welche vor Festlegung der Dreiecke definiert werden müssen.

Die Definition der Referenzpunkte kann dabei entweder manuell oder aber auch automatisiert erfolgen, ist jedoch ebenso wie das Überziehen des Zielbildes bzw. des aktuellen Bildes mit den erwähnten Dreiecken Voraussetzung für den Bildtransformationsprozess.

Ein solcher ein Dreieck von einem aktuellen Bild in ein Zielbild transformierender Bildtransformationsprozess ist hinlänglich bekannt und basiert auf dem Prinzip, dass einander zugeordnete Dreieckspaare jeweils ein eigenes Koordinatensystem definieren. Einer der Eckpunkte eines jeden Dreiecks wird dabei als Ursprungspunkt des Koordinatensystems definiert, wobei die Auswahl des Eckpunktes nicht relevant ist, solange derselbe Eckpunkt sowohl im aktuellen Bild als auch im Zielbild als Ursprungspunkt des jeweiligen Dreieckskoordinatensystem herhält. Die beiden an den Eckpunkt anschließenden Seiten des Dreiecks bilden die Achsen des Koordinatensystems und die Längen dieser Seiten definieren einen Einheitsvektor entlang dieser Achsen. Somit hat jeder Punkt innerhalb dieses Dreiecks, unabhängig ob im Zielbild oder im aktuellen Bild eindeutige Dreieckskoordinaten.

Bei der Bildtransformation des Dreiecks des aktuellen Bildes in ein Dreieck des Zielbildes handelt es sich somit um eine Transformation von einem Koordinatensystem in ein anderes.

Ist beispielsweise ein Bildpunkt im Zielbild bekannt, ist es somit möglich den korrespondierenden Bildpunkt im aktuellen Bild zu bestimmen und kann somit die Transformation des aktuellen Bildes in das Zielbild vornehmen.

Die Umrechnung eines Bildpunktes mit den allgemeinen Koordinaten $(x,y)$ in Koordinaten $(x_t, y_t)$ im Koordinatensystem eines Dreiecks erfolgt dabei gemäß der folgenden Gleichung:

$$\begin{pmatrix} x \\ y \end{pmatrix} = \begin{pmatrix} x_1 \\ y_1 \end{pmatrix} + \begin{bmatrix} c_{12,} & c_{13,} \\ c_{12,} & c_{13,} \end{bmatrix} \begin{pmatrix} x_t \\ y_t \end{pmatrix}$$

Gleichung 1

mit $(x_1,y_1)$ als Koordinaten eines ersten Eckpunktes des Dreiecks und $e_{12}, e_{13}$ als Einheitsvektoren des Koordinatensystems des Dreiecks.

Um die Koordinaten $(x_t, y_t)$ des Bildpunktes im Dreieckskoordinatensystem zu ermitteln ist es daher erforderlich, obige Matrix zu invertieren.

$$\begin{pmatrix} x_t \\ y_t \end{pmatrix} = \begin{bmatrix} e_{12_x} & e_{13_x} \\ e_{12_y} & e_{13_y} \end{bmatrix}^{-1} \begin{pmatrix} x - x_1 \\ y - y_1 \end{pmatrix} = \frac{1}{e_{12_x}e_{13_y} - e_{12_y}e_{13_x}} \begin{bmatrix} e_{13_y} & -e_{13_x} \\ -e_{12_y} & e_{12_x} \end{bmatrix} \begin{pmatrix} x - x_1 \\ y - y_1 \end{pmatrix}$$

```
Gleichung 2
```

Die Determinante $e_{12x}e_{13y}$-$e_{12y}e_{13x}$ ist nur dann Null, wenn die beiden Einheitsvektoren linear abhängig sind, was nur dann der Fall ist, wenn das Dreieck keine Fläche aufweist. Ein solches Dreieck ist jedoch für die Bildtransformation nicht relevant.

Die beschriebenen Berechnungen können sowohl für das aktuelle Bild als auch für das Zielbild vorgenommen werden.

In vielen Anwendungsfällen, insbesondere auf dem Gebiet der Bilderkennung ist es erforderlich, aktuelle Bilder sehr oft in ein und dasselbe Zielbild zu transformieren, wobei mit aktuelle Bilder nicht unbedingt unterschiedliche Bilder im herkömmlichen Sinn gemeint sind sondern auch identische Bilder im herkömmlichen Sinne, die jedoch aufgrund der Zuordnung unterschiedlicher Referenzpunkte (Landmarks) als unterschiedlich im Sinne der Erfindung angesehen werden. Das Zielbild wird dabei regelmäßig vorweg definiert und ändert sich, je nach Anwendungsfall, über längere Zeit nicht bzw. manchmal auch gar nicht. Es ist definiert durch die oben beschriebenen Referenzpunkte sowie einer Anzahl einander nicht überlappender Dreiecke, welche die Referenzpunkte miteinander verbinden. In solchen Fällen sind somit die allgemeinen Koordinaten

$$\begin{pmatrix} x^{Ziel} \\ y^{Ziel} \end{pmatrix}$$

der Bildpunkte eines jeden Dreiecks bzw. innerhalb eines jeden Dreieckes des Zielbildes bekannt und man sucht die entsprechenden allgemeinen Koordinaten der Bildpunkte

$$\begin{pmatrix} x^{aktuell} \\ y^{aktuell} \end{pmatrix}$$

im korrespondierenden Dreieck im aktuellen Bild.

Dies kann insoferne geschehen, als gemäß Gleichung 2 die Koordinaten der Bildpunkte des Zielbildes ausgedrückt im Koordinatensystem der jeweiligen Dreiecke

$$\begin{pmatrix} x_t^{Ziel} \\ y_t^{Ziel} \end{pmatrix}$$

berechnet werden können. Aufgrund der bereits erwähnten Tatsache, dass der Bildtransformationsprozess (Image Warping Process) die Koordinaten der Bildpunkte innerhalb eines Dreiecks, ausgedrückt im Koordinatensystem des jeweiligen Dreieckes, nicht verändert, gilt die folgende Gleichung:

$$\begin{pmatrix} x_t^{Ziel} \\ y_t^{Ziel} \end{pmatrix} = \begin{pmatrix} x_t^{aktuell} \\ y_t^{aktuell} \end{pmatrix}$$

Somit kann aber das gesuchte

$$\begin{pmatrix} x^{aktuell} \\ y^{aktuell} \end{pmatrix}$$

anhand von Gleichung 1 leicht errechnet werden.

Um die einzelnen Dreiecke des aktuellen Bildes in die Dreiecke des Zielbildes zu transformieren bedienen sich bekannte Verfahren dieser Rechenoperationen, wobei für jede Bildtransformation eines aktuellen Bildes in ein und dasselbe Zielbild jeweils die angeführten Rechenoperationen erneut durchgeführt werden und zwar für jedes Dreieck bzw. für jeden Bildpunkt innerhalb eines Dreiecks.

Bedenkt man die heute üblichen Bildauflösungen (Anzahl der Bildpunkte pro Bild) bzw. geht man davon aus, dass sich diese Bildauflösungen in Zukunft weiter stark verbessern werden, so ist offensichtlich, dass die dabei erforderlichen Rechenoperationen trotz ständig ansteigender Rechenleistung sehr viel Zeit in Anspruch nehmen.

Es ist daher die Aufgabe der vorliegenden Erfindung, diesen Nachteil zu vermeiden und ein Verfahren zum Transformieren mehrerer aktueller digitaler Bilder in ein gleich bleibendes digitales Zielbild mittels eines Bildtransformationsprozesses dahingehend zu optimieren, dass die erforderliche Rechenzeit stark verkürzt wird.

Erfindungsgemäß wird dies durch die kennzeichnenden Merkmale des Anspruchs 1 erreicht.

Bei einem Verfahren zum Transformieren mehrerer aktueller digitaler Bilder in ein digitales Zielbild mittels eines Bildtransformationsprozesses, wobei sowohl das Zielbild als auch jedes der aktuellen Bilder Referenzpunkte aufweisen, die mittels Triangulation zu einer Anzahl einander nicht überlappender Dreiecke verbunden sind, wobei einem Dreieck in einem aktuellen Bild jeweils ein Dreieck im Zielbild zugeordnet ist bzw. umgekehrt und durch diese Zuordnung die Transformation eines Dreiecks samt der innerhalb des Dreiecks liegenden Bildpunkte eines aktuellen Bildes in das Zielbild vorgegeben ist und durch Transformation aller Dreiecke eines aktuellen digitalen Bildes in das digitale Zielbild die Bildtransformation des gesamten aktuellen Bildes in das Zielbild abgeschlossen ist, ist dabei erfindungsgemäß vorgesehen, dass die für die Durchführung einer jeden Bildtransformation von einem aktuellen Bild in ein Zielbild erforderliche Berechnung der Zugehörigkeit eines jeden Bildpunktes des Zielbildes zu einem Dreieck des Zielbildes sowie die Berechnung der Koordinaten eines jeden Bildpunktes des Zielbildes innerhalb eines Dreiecks im Koordinatensystem dieses Dreiecks lediglich einmal erfolgt und als Basis für jede Bildtransformation eines aktuellen Bildes in das Zielbild dient.

Dadurch kann der aus dem Stand der Technik bekannte Nachteil der sich ständig wiederholenden, für die Berechnung der Zugehörigkeit eines jeden Bildpunktes des Zielbildes zu einem Dreieck des Zielbildes sowie die Berechnung der Koordinaten eines jeden Bildpunktes des Zielbildes innerhalb eines Dreiecks im Koordinatensystem dieses Dreiecks erforderlichen Rechenoperationen, vermieden werden und anstattdessen, nach einmaliger Durchführung dieser Rechenoperationen die Ergebnisse für sämtliche Bildtransformationsprozesse verwendet werden. Dabei wird insbesondere ausgenutzt, dass bei bestimmten Anwendungsgebieten, auf welche sich die vorliegende Erfindung richtet, das digitale Zielbild im wesentlichen über einen längeren Zeitraum unverändert bleibt.

Weitere vorteilhafte Merkmale der Erfindung sind den Unteransprüchen zu entnehmen.

So ist beispielsweise vorgesehen, dass in einem ersten Verfahrenschritt, nach dem Start des Verfahrens, für jeden Bildpunkt des Zielbildes dessen Zugehörigkeit zu einem Dreieck des Zielbildes sowie für jeden Bildpunkt innerhalb eines Dreiecks im Zielbild dessen Koordinaten im Koordinatensystem dieses Dreiecks berechnet werden. Somit ist gewährleistet, dass die Ergebnisse dieser Rechenoperationen unmittelbar nach Verfahrensstart zur Verfügung stehen und somit sämtliche nachfolgend durchgeführten Bildtransformationsprozesse von diesen Ergebnissen Gebrauch machen können, wie dies gemäß einer weiteren bevorzugten Ausführungsvariante der Erfindung vorgesehen ist.

Gemäß einer weiteren vorteilhaften Ausführungsvariante der Erfindung, ist es vorgesehen, dass die Berechnung der Zugehörigkeit eines jeden Bildpunktes des Zielbildes zu einem Dreieck des Zielbildes sowie die Berechnung der Koordinaten eines jeden Bildpunktes des Zielbildes innerhalb eines Dreiecks im Koordinatensystem dieses Dreiecks stets für Gruppen unmittelbar benachbarter Bildpunkte erfolgt, unabhängig von deren Zugehörigkeit zum gleichen Dreieck. Dadurch kann der Umstand berücksichtigt werden, dass der bei Datenverarbeitungsanlagen zwischen CPU und Hauptspeicher geschaltete kleine aber sehr schnelle Zwischenspeicher vorangegangene Speicherzugriffe zwischenspeichert und gleichzeitig auch benachbarte Speicherzellen, sozusagen als freiwillige Zusatzarbeit, abfragt und zwischenspeichert, so dass Werte benachbarter Speicherzellen stets schnell verfügbar sind.

In einer weiteren vorteilhaften Ausführungsvariante der Erfindung ist vorgesehen, dass die Transformation von Bildpunkten des aktuellen digitalen Bildes in das digitale Zielbild stets für Gruppen unmittelbar benachbarter Bildpunkte erfolgt, unabhängig von deren Zugehörigkeit zum gleichen Dreieck.

Im Anschluss erfolgt nun eine detaillierte Beschreibung der Erfindung anhand eines Ausführungsbeispiels.

Dabei zeigt

Fig.1     eine schematische Darstellung eines erfindungsgemäßen Verfahrens

Fig.2     eine schematische Darstellung eines Dreiecks im digitalen Zielbild sowie im aktuellen digitalen Bild

Als Ausführungsbeispiel des erfindungsgemäßen Verfahrens wird dessen Anwendung in sogenannten Active Appearance Modelling Verfahren beschrieben, deren Ziel es ist, festzustellen, ob das aktuelle digitale Bild ADB eines interessierenden Objektes (beispielsweise eines Gesichtes) formenmäßig einem digitalen Zielbild DZB eines Objektes gleicher Art (Gesicht) entspricht.

Das digitale Zielbild DZB ist dabei das Ergebnis einer Analyse einer Vielzahl von Bildern Objekte gleicher Art. Mit anderen Worten handelt es sich beim digitalen Zielbild DZB um die mittlere Form dieser Objekte gleicher Art.

Als aktuelles digitales Bild ADB dient ein Bild des interessierenden Objektes, das mittels einer Kamera aufgenommen wurde.

Auf diese Art und Weise soll festgestellt werden, ob das aktuelle digitale Bild ADB bestimmte Charakteristika aufweist was die Form des abgebildeten Objektes betrifft, im Falle des Gesichtes beispielsweise ob das Gesicht offene Augen oder geschlossene Augen aufweist oder aber ob die im aktuellen digitalen Bild ADB vorhandenen Augen in eine bestimmte Richtung blicken, etc..

An dieser Stelle sei angemerkt, dass es sich beim vorliegenden Ausführungsbeispiel lediglich um eines von vielen möglichen Anwendungsgebieten des vorliegenden erfindungsgemäßen Verfahrens zum Transformieren mehrerer aktueller digitaler Bilder ADB in ein gleich bleibendes digitales Zielbild DZB handelt.

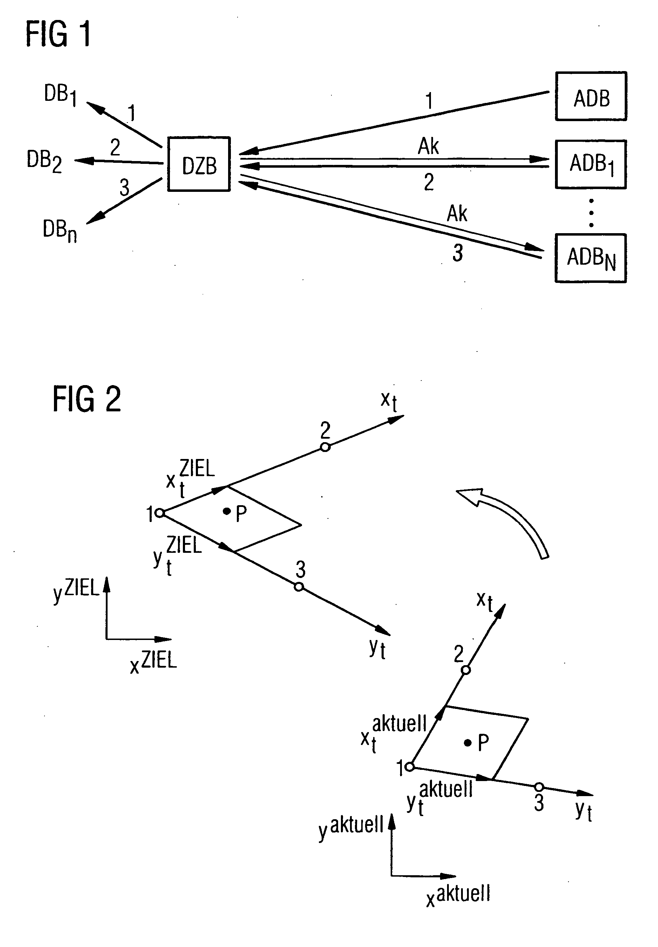

Um die gesuchte Feststellung treffen zu können, wird das aktuelle digitale Bild ADB in das digitale Zielbild DZB transformiert und zwar in jenes digitale Zielbild DZB, welches im Hinblick auf die gesuchte Feststellung modelliert wurde, also beispielsweise ein Gesicht mit offenem Mund, wenn die Feststellung gesucht ist, ob das aktuelle digitale Bild ADB eines Gesichtes einen offenen Mund aufweist. Aus dem in das digitale Zielbild DZB transformierten aktuellen digitalen Bild ADB und dem digitalen Zielbild DZB wird in weiterer Folge in an sich bekannter Weise ein Differenzbild DB errechnet und dadurch festgestellt, ob das aktuelle digitale Bild ADB dem digitalen Zielbild DZB entspricht. Ist dies der Fall kann die gesuchte Feststellung getroffen werden, ist dies nicht der Fall, so wird das aktuelle digitale Bild ADB entsprechend aktualisiert (siehe Pfeile AK in Fig.1) zu $ADB_1$ und die Bildtransformation erneut durchgeführt, solange bis das letzte Differenzbild $DB_n$ die gesuchte Feststellung ermöglicht.

Bei dem hier beschriebenen Verfahren handelt es sich somit um ein iteratives Verfahren.

Wie unmittelbar aus dem bisher gesagten hervorgeht handelt es sich bei den stetig aktualisierten aktuellen Bildern ADB bis $ADB_n$ um Bilder, die zwar identisch sind, was das Motiv betrifft, nicht jedoch was deren für die Durchführung des Verfahrens wesentliche Parameter betrifft, die im Zuge des iterativen Verfahrens stets aktualisiert werden.

Einige dieser wesentlichen Parameter sind Referenzpunkte, mit welchen das aktuelle digitale Bild überzogen wird und die dann

mittels Triangulation zu einander nicht überlappenden Dreiecken verbunden werden.

Zum Setzen der Referenzpunkte sowie zur Durchführung der Triangulation wird das mittels Kamera aufgenommene aktuelle digitale Bild ADB an eine Datenverarbeitungseinheit weitergeleitet.

Gleichzeit ist in einer Bestandteil der Datenverarbeitungseinheit bildenden Speichereinheit das erwähnte digitale Zielbild DZB abgespeichert, in welches das aktuelle digitale Bild ADB bzw. die entsprechend aktualisierten aktuellen digitalen Bilder $ADB_n$ transformiert werden sollen, um die gesuchte Feststellung treffen zu können. Auch das digitale Zielbild DZB ist mit Referenzpunkten überzogen, die mittels Triangulation zu einander nicht überlappenden Dreiecken verbunden werden, wobei jedem Dreieck im Zielbild DZB ein Dreieck im aktuellen Bild ADB zugeordnet ist bzw. umgekehrt und somit für jedes Dreieck und damit für das gesamte Bild die auf jeden Bildpunkt anzuwendende Transformation vorgegeben ist.

Die für die Bildtransformation erforderlichen Berechnungen werden dabei erfindungsgemäß was das digitale Zielbild DZB betrifft lediglich einmal, zu Beginn des erfindungsgemäßen Verfahrens vorgenommen und können dann jeder einzelnen Bildtransformation eines (aktualisierten) aktuellen digitalen Bildes $ADB_n$ in das digitale Zielbild DZB zugrundegelegt werden. Messungen haben ergeben, dass die für die Durchführung dieses iterativen Verfahrens erforderliche Zeit dadurch wesentlich gegenüber bekannten Verfahren reduziert werden kann. Insbesondere ermöglicht es das erfindungsgemäße Verfahren, die Bildtransformation ohne Einsatz einer, wie bisher üblich, Graphikkarte durchzuführen, sondern ausschließlich von der CPU durchführen zu lassen.

Im Detail wird dabei in einem ersten Verfahrensschritt zu Beginn des erfindungsgemäßen Verfahrens für jeden Bildpunkt P des digitalen Zielbildes DZB berechnet, zu welchem Dreieck im digitalen Zielbild DZB der jeweilige Bildpunkt P gehört. Anschließend wird für jeden Bildpunkt P in einem Dreieck des Zielbildes DZB dessen Koordinaten im Koordinatensystem dieses Dreiecks gemäß

$$\begin{pmatrix} x_t^{Ziel} \\ y_t^{Ziel} \end{pmatrix} = \begin{bmatrix} e_{12_x} & e_{13_x} \\ e_{12_y} & e_{13_y} \end{bmatrix}^{-1} \begin{pmatrix} x - x_1 \\ y - y_1 \end{pmatrix} = \frac{1}{e_{12_x} e_{13_y} - e_{12_y} e_{13_x}} \begin{bmatrix} e_{13_y} & -e_{13_x} \\ -e_{12_y} & e_{12_x} \end{bmatrix} \begin{pmatrix} x - x_1 \\ y - y_1 \end{pmatrix}$$

berechnet, wie aus Fig.2 ersichtlich ist.

Die so erhaltenen Koordinaten der Bildpunkte des digitalen Zielbildes DZB werden dann entsprechend abgespeichert, vorzugsweise gemeinsam mit einer Dreiecks ID für das jeweilige Dreieck, innerhalb welchem sich die einzelnen Bildpunkte P befinden und stehen für die folgenden Bildtransformationen zur Verfügung.

In weiteren Verfahrensschritten wird dann aufgrund

$$\begin{pmatrix} x_t^{Ziel} \\ y_t^{Ziel} \end{pmatrix} = \begin{pmatrix} x_t^{aktuell} \\ y_t^{aktuell} \end{pmatrix}$$

für jeden Bildpunkt des aktuellen digitalen Bildes ADB dessen Transformation in das digitale Zielbild DZB berechnet, nämlich gemäß

$$\begin{pmatrix} x^{aktuell} \\ y^{aktuell} \end{pmatrix} = \begin{pmatrix} x_1 \\ y_1 \end{pmatrix} + \begin{bmatrix} e_{12_x} & e_{13_x} \\ e_{12_y} & e_{13_y} \end{bmatrix} \begin{pmatrix} x_t^{Ziel} \\ y_t^{Ziel} \end{pmatrix}$$

so dass nach Transformation aller Bildpunkte das gesamte aktuelle digitale Bild transformiert wurde.

In einem weiteren Verfahrensschritt wird ein Differenzbild DB aus dem transformierten Bild und dem Zielbild DZB ermittelt und aufgrund des Differenzbildes entschieden, ob das aktuelle Bild ADB zu ADB$_1$ aktualisiert werden muss und die Transformation erneut durchgeführt werden muss, oder aber ob die gesuchte Feststellung mit ausreichender Sicherheit aufgrund des transformierten Bildes getroffen werden kann.

Das erfindungsgemäße Verfahren hat den Vorteil, dass unabhängig von der Anzahl der erfoderlichen iterativen Schritte sowie unabhängig von der Anzahl der Dreiecke, die für die Bildtransformation benötigt werden, die Berechnungen betreffend die Bildpunkte des Zielbildes nur einmal zu Beginn des iterativen Verfahrens vorgenommen werden müssen.

In einer bevorzugten Ausführungsvariante der Erfindung erfolgen die Berechnungen, zu welchem Dreieck im digitalen Zielbild DZB ein Bildpunkt gehört sowie die Berechnungen der Koordinaten der einzelnen Bildpunkte im Koordinatensystem der Dreiecke, innerhalb welcher sich die Bildpunkte befinden, stets für Gruppen unmittelbar benachbarter Bildpunkte, unabhängig von deren Zugehörigkeit zum gleichen Dreieck, wobei unter benachbarter Bildpunkte jene Bildpunkte verstanden werden, die im allgemeinen Koordinatensystem in einer Reihe nebeneinander angeordnet sind (siehe Fig. 3)

Grundlage hierfür ist die Annahme, dass im vorliegend beschriebenen Anwendungsfall sich die Dreiecke im Zuge der Transformation nicht stark drehen und daher Sequenzen aufeinanderfolgender Bildpunkte existieren, die sowohl im Zielbild als auch im aktuellen Bild zum gleichen Dreieck gehören. Diese Vorgehensweise hat auch den Vorteil, dass das Auslesen der Bildpunkte aus dem zwischen CPU und Hauptspeicher angeordneten Zwischenspeicher erfolgen kann und dieser die zum aktuell bearbeiteten Bildpunkt benachbarten Bildpunkte ebenfalls mitausliest., diese sozusagen bereits zu Verfügung stehen und kein erneuter Speicherzugriff erforderlich ist.

Gleiches gilt auch für die Transformation von Bildpunkten des aktuellen digitalen Bildes ADB in das digitale Zielbild DZB, wobei die Berechnung der Transformationen stets für Gruppen unmittelbar benachbarter Bildpunkte erfolgt, unabhängig von deren Zugehörigkeit zum gleichen Dreieck.

**Patentansprüche**

1.  Verfahren zum Transformieren mehrerer aktueller digitaler Bilder in ein digitales Zielbild mittels eines Bildtransformationsprozesses, wobei sowohl das Zielbild als auch jedes der aktuellen Bilder Referenzpunkte aufweisen, die mittels Triangulation zu einer Anzahl einander nicht überlappender Dreiecke verbunden sind, wobei einem Dreieck in einem aktuellen Bild jeweils ein Dreieck im Zielbild zugeordnet ist bzw. umgekehrt und durch diese Zuordnung die Transformation eines Dreiecks samt der innerhalb des Dreiecks liegenden Bildpunkte eines aktuellen Bildes in das Zielbild vorgegeben ist und durch Transformation aller Dreiecke eines aktuellen digitalen Bildes in das digitale Zielbild die Bildtransformation des gesamten aktuellen Bildes in das Zielbild abgeschlossen ist, **dadurch gekennzeichnet, dass** die für die Durchführung einer jeden Bildtransformation von einem aktuellen Bild in ein Zielbild erforderliche Berechnung der Zugehörigkeit eines jeden Bildpunktes des Zielbildes zu einem Dreieck des Zielbildes sowie die Berechnung der Koordinaten eines jeden Bildpunktes des Zielbildes innerhalb eines Dreiecks im Koordinatensystem dieses Dreiecks lediglich einmal erfolgt und als Basis für jede Bildtransformation eines aktuellen Bildes in das Zielbild dient.

2. Verfahren zum Transformieren mehrerer aktueller digitaler Bilder in ein digitales Zielbild mittels eines Bildtransformationsprozesses gemäß Anspruch 1, **dadurch gekennzeichnet, dass** in einem ersten Verfahrenschritt nach dem Start des Verfahrens für jeden Bildpunkt des Zielbildes dessen Zugehörigkeit zu einem Dreieck des Zielbildes sowie für jeden Bildpunkt innerhalb eines Dreiecks im Zielbild dessen Koordinaten im Koordinatensystem dieses Dreiecks berechnet werden.

3. Verfahren zum Transformieren mehrerer aktueller digitaler Bilder in ein Zielbild mittels eines Bildtransformationsprozesses gemäß Anspruch 2, **dadurch gekennzeichnet, dass** der erste Verfahrensschritt zeitlich gesehen vor der Durchführung des Bildtransformationsprozesses erfolgt.

4. Verfahren zum Transformieren mehrerer aktueller digitaler Bilder in ein Zielbild mittels eines Bildtransformationsprozesses gemäß Anspruch 2 oder 3, **dadurch gekennzeichnet, dass** in einem weiteren Verfahrensschritt mithilfe der in die Koordinatensysteme der einzelnen Dreiecke umgerechneten Koordinaten der Bildpunkte des Zielbildes die Transformation der Bildpunkte der aktuellen Bilder in Bildpunkte des Zielbildes erfolgt.

5. Verfahren zum Transformieren mehrerer aktueller digitaler Bilder in ein Zielbild gemäß einem der Ansprüche 1 bis 4, **dadurch gekennzeichnet, dass** die Berechnung der Zugehörigkeit eines jeden Bildpunktes des Zielbildes zu einem Dreieck des Zielbildes sowie die Berechnung der Koordinaten eines jeden Bildpunktes des Zielbildes innerhalb eines Dreiecks im Koordinatensystem dieses Dreiecks stets für Gruppen unmittelbar benachbarter Bildpunkte erfolgt, unabhängig von deren Zugehörigkeit zum gleichen Dreieck.

6. Verfahren zum Transformieren mehrerer aktueller digitaler Bilder in ein Zielbild gemäß einem der Ansprüche 1 bis 5, **dadurch gekennzeichnet, dass** die Transformation von Bildpunkten des aktuellen digitalen Bildes in das digitale Zielbild stets für Gruppen unmittelbar benachbarter Bildpunkte erfolgt, unabhängig von deren Zugehörigkeit zum gleichen Dreieck.

## Claims

1. Method for transforming a plurality of current digital images into a digital target image by means of an image transformation process, both the target image and each of the current images having reference points which are connected by means of triangulation to form a number of mutually nonoverlapping triangles, a triangle in a current image respectively being assigned a triangle in the target image, and vice versa, and the transformation of a triangle together with the pixels, lying inside the triangle, of a current image into the target image being prescribed by this assignment, and the image transformation of the entire current image into the target image being concluded by transformation of all the triangles of a current digital image into the digital target image, **characterized in that** the calculation, required for carrying out each image transformation from a current image into a target image, of the association of each pixel of the target image with a triangle of the target image, as well as the calculation of the coordinates of each pixel of the target image inside a triangle in the coordinate system of this triangle are performed only once and serve as a basis for each image transformation of a current image into the target image.

2. Method for transforming a plurality of current digital images into a digital target image by means of an image transformation process in accordance with Claim 1, **characterized in that** in a first method step at the start of the method the association of each pixel of the target image with a triangle of the target image is calculated and also the coordinates of each pixel inside a triangle in the target image are calculated in the coordinate system of this triangle.

3. Method for transforming a plurality of current digital images into a target image by means of an image transformation process in accordance with Claim 2, **characterized in that**, in terms of time, the first method step is performed ahead of the carrying out of the image transformation process.

4. Method for transforming a plurality of current digital images into a target image by means of an image transformation process in accordance with Claim 2 or 3, **characterized in that** in a further method step the transformation of the pixels of the current images into pixels of the target image is performed with the aid of the coordinates, converted into the coordinate systems of the individual triangles, of the pixels of the target image.

5. Method for transforming a plurality of current digital images into a target image in accordance with one of Claims 1 to 4, **characterized in that** the calculation of the association of each pixel of the target image with a triangle of the target image, as well as the calculation of the coordinates of each pixel of the target image inside a triangle in the coordinate system of this triangle are always performed for groups of directly adjacent pixels, independently of their association with the same triangle.

6. Method for transforming a plurality of current digital images into a target image in accordance with one of Claims 1 to 5, **characterized in that** the transformation of pixels of the current digital image into the digital target image is always performed for groups of directly adjacent pixels, independently of their association with the same triangle.

**Revendications**

1. Procédé de transformation de plusieurs images numériques instantanées en une image cible numérique au moyen d'un processus de transformation d'image, dans lequel, tant l'image cible qu'également chacune des images instantanées à des points de référence qui sont reliés au moyen d'une triangulation en un certain nombre de triangles ne se chevauchant pas les uns avec les autres, dans lequel, à un triangle dans une image instantanée, est associé respectivement un triangle dans l'image cible et inversement et, par cette association, la transformation d'un triangle ensemble avec les pixels d'une image instantanée se trouvant à l'intérieur du triangle est prescrite dans l'image cible et, par transformation de tous les triangles d'une image numérique instantanée dans l'image cible numérique, la transformation de toute l'image instantanée en l'image cible est terminée, **caractérisé en ce que** l'on effectue le calcul, nécessaire pour l'exécution de chaque transformation d'une image instantanée en une image cible, de l'appartenance de chaque pixel de l'image cible à un triangle de l'image cible, ainsi que le calcul des coordonnées de chaque pixel de l'image cible à l'intérieur d'un triangle dans le système de coordonnées de ces triangles, seulement une fois et on s'en sert comme base pour chaque transformation d'une image instantanée en l'image cible.

2. Procédé de transformation de plusieurs images numériques instantanées en une image cible numérique au moyen d'un processus de transformation d'image suivant la revendication 1, **caractérisé en ce qu'**un premier stade de procédé, après le début du procédé, on calcule, pour chaque pixel de l'image cible, son appartenance à un triangle de l'image cible ainsi que, pour chaque pixel à l'intérieur d'un triangle dans l'image cible, ses coordonnées dans le système de coordonnées de ce triangle.

3. Procédé de transformation de plusieurs images numériques instantanées en une image cible numérique au moyen d'un processus de transformation d'image suivant la revendication 2, **caractérisé en ce qu'**on effectue le premier stade du procédé considéré dans le temps avant l'exécution du processus de transformation d'image.

4. Procédé de transformation de plusieurs images numériques instantanées en une image cible numérique au moyen d'un processus de transformation d'image suivant la revendication 2 ou 3, **caractérisé en ce que**, dans un autre stade du procédé, on effectue, à l'aide des coordonnées des pixels de l'image cible recalculées dans le système de coordonnées des divers triangles, la transformation des pixels des images instantanées en pixels de l'image cible.

5. Procédé de transformation de plusieurs images numériques instantanées en une image cible numérique au moyen d'un processus de transformation d'image suivant l'une des revendications 1 à 4, **caractérisé en ce que** l'on effectue le calcul de l'appartenance de chaque pixel de l'image cible à un triangle de l'image cible, ainsi que le calcul des coordonnées de chaque pixel de l'image cible dans un triangle, dans le système de coordonnées de ce triangle, toujours pour des groupes de pixels immédiatement voisins indépendamment de leur appartenance au même triangle.

6. Procédé de transformation de plusieurs images numériques instantanées en une image cible numérique au moyen d'un processus de transformation d'image suivant l'une des revendications 1 à 5, **caractérisé en ce que** l'on effectue la transformation de pixels de l'image numérique instantanée dans l'image cible numérique, toujours pour des groupes de pixels immédiatement voisins indépendamment de leur appartenance au même triangle.

## FIG 1

DB$_1$

1

DB$_2$

2

DZB

3

DB$_n$

1

ADB

Ak

ADB$_1$

2

Ak

3

ADB$_N$

## FIG 2

$x_t$

2

$x_t^{ZIEL}$

1

• P

$y_t^{ZIEL}$

3

$y^{ZIEL}$

$y_t$

$x^{ZIEL}$

$x_t$

2

$x_t^{aktuell}$

• P

1

$y_t^{aktuell}$

3

$y_t$

$y^{aktuell}$

$x^{aktuell}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4276570 A